# EUROPÄISCHE PATENTSCHRIFT

(11) **EP 0 874 473 B1**
(45) Veröffentlichungstag und Bekanntmachung des Hinweises auf die Patenterteilung: **15.06.2005**
(21) Anmeldenummer: 98105998.3
(22) Anmeldetag: 02.04.1998
(51) Int. Cl.: H04B 7/005, H03G 3/20, H01Q 1/00, H01Q 1/52

(54) **Leistungregelung für eine Funk-Kommunikations-Anordnung**
Power control for a radio communications system
Système de réglage de puissance pour un dispositif de radiocommunication

(30) Priorität: 14.10.1997 DE 19745327; 11.04.1997 DE 29706463 U
(43) Veröffentlichungstag der Anmeldung: 28.10.1998
(73) Patentinhaber: Paulus, Patrick, 88471 Laupheim (DE)
(72) Erfinder: Paulus, Patrick, 88471 Laupheim (DE)
(74) Vertreter: Weber, Gerhard, Dipl.-Phys.

(56) Entgegenhaltungen:
- EP-A- 0 556 010
- EP-A- 0 692 885
- EP-A- 0 782 213
- WO-A-96/27242

## Beschreibung

Die Erfindung betrifft eine Funk-Kommunikations-Anordnung mit einer Antennenanordnung und einer zwischen die Antennenanordnung und ein Sende-Empfangs-Gerät eingefügten Übertragungseinrichtung sowie dafür geeignete Übertragungseinrichtungen.

Eine Übertragungseinrichtung zwischen einem Sende-Empfangs-Gerät und einer Antenne ist beispielsweise aus der DE 195 14 993 bekannt. Die Übertragungseinrichtung enthält einen Sendeverstärker und einen Empfangsverstärker, die über zwei Umschalter alternativ mit einem Sende-Empfangs-Gerät verbindbar sind. Die Umschaltung ist durch einen Detektor gesteuert, der über die Signalamplituden auswertet, ob das Gerät Signale absendet. In einer aus der G 94 03 022.7 bekannten Anordnung sind die Umschalter durch das Sendesignal oder durch eine konventionelle Selektionsschaltung gesteuert. Schließlich zeigt auch noch die DE 40 25 466 A1 eine solche Übertragungseinrichtung, bei welcher die Umschaltung über gesteuerte PIN-Dioden erfolgt. Die Umschalter sind durch die zusätzlich erforderlichen Steuermittel und/oder Steuersignale nachteilig.

Die DE 40 25 466 A1 zeigt zusätzlich auch noch Schaltungen, bei welchen bei ausreichender Frequenzdifferenz zwischen Sendesignal und Empfangssignal eine gegenseitige Isolation eines Sendezweigs und eines Empfangszweigs mit je einem Verstärker durch Bandpaßfilter in den beiden Signalzweigen erfolgt.

In der WO96/27242 A2 ist ein Transceiver-System für digitale Kommunikation beschrieben, bei welchem zwischen einem Modem-Interface und einer Sende-Empfangs-Antenne ein Antennen-Interface-System eingefügt ist. Das Antennen-Interface-System enthält einen Sendesignalpfad mit einem Leistungsverstärker und einem diesem vorgeschalteten variablen Dämpfungsglied. Das Dämpfungsmaß des Dämpfungsglieds ist adaptiv einstellbar über einen Regelkreis, welcher mittels eines Detektors den Ausgangssignalpegel des Leistungsverstärkers überwacht und mit einem Referenzwert vergleicht. Im Empfangssignalpfad ist ein rauscharmer Vorverstärker angeordnet. Empfangssignalpfad und Sendesignalpfad sind antennenseitig über einen ersten Duplexer und zum Modem-Interface hin über einen zweiten Duplexer zusammengeführt.

Die EP 0 556 010 A1 zeigt eine Mobiltelefonanordnung mit einem an ein Mobiltelefon anschließbaren Booster, über welchen anstelle der eigenen Antenne des Mobiltelefons eine Kommunikation in einem zellularen System abgewickelt werden kann. Der Booster enthält mit einer ersten Sende-Empfangs-Antenne über einen Duplex-Filter verbunden einen Sendesignalpfad mit einem Sendeverstärker und einem ersten Empfangssignalpfad mit einem Empfangsverstärker. Anstelle der ersten Sende-Empfangs-Antenne kann im Empfangs-Diversity-Betrieb eine zweite Empfangsantenne mit eigenem Empfangsverstärker über einen Umschalter ausgewählt werden. Der Sendeverstärker des Boosters kann eine Verstärkungsregelung enthalten.

In der EP 0 782 213 A2 sind verschiedene Ausführungen zur Verbindung einer abgesetzten Sende-Empfangs-Antenne mit einer Sendeeinheit und einer Empfangseinheit über eine zwischengeschaltete Antenneneinheit beschrieben. Die Antenneneinheit enthält einen Empfangssignalpfad mit einem Vorverstärker und einen Sendesignalpfad, in welchem ein Sendeverstärker angeordnet sein kann. Sendesignalpfad und Empfangssignalpfad sind antennenseitig über einen Duplexer zusammengeführt. Bei Ausführungen mit einer gemeinsamen Verbindungsleitung zu Sende- und Empfangseinheit ist ein weiterer Duplexer zum Anschluss der Verbindungsleitung an Sendesignalpfad und Empfangssignalpfad der Antenneneinheit vorgesehen. Die Antenneneinheit kann im Sendesignalpfad einen Sendesignalverstärker enthalten.

Aus der DE 41 10 772 A1 ist es bekannt, bei hoher Stationsdichte mit geringen Stationsabständen in nicht regulierten Funksystemen, wie z. B. CB-Funk die in einer Station durch die geringe Entfernung zu einer sendenden Nachbarstation auftretenden Empfangsstörungen aufgrund Übersteuerung dadurch zu beseitigen, dass bei allen Stationen zwischen Sende-Empfangs-Gerät und die Sende-Empfangsantenne ein Dämpfungsglied eingefügt wird, welches für ein amplitudenschwaches Empfangssignal eine geringe Dämpfung, für das amplitudenstärkere Sendesignal hingegen eine wesentlich höhere Dämpfung bewirkt. Das Dämpfungsglied kann z. B. Kaltleiter, Heißleiter oder Begrenzerdioden enthalten.

Darüber hinaus gibt es Funk-Kommunikationssysteme mit Einschränkungen der Betriebsparameter. Beispielsweise beträgt für Funksysteme nach der europäischen Norm ETS 300328 die auf einen isotropen Strahler bezogene maximal zulässige abgestrahlte Leistung (EIRP) 100 mW (20 dBm). Die für den Betrieb in einem solchen Funk-Kommunikationssystem als Sende-Empfangs-Geräte angebotenen Funk-Modems weisen typischerweise eine Ausgangsleistung auf, die bei Verwendung einer Dipolantenne als Sendeantenne zu einer grenzwertnahen Leistungsabstrahlung führt. Bei Verwendung von Richtantennen insbesondere Hochgewinn-Antennen zum Signalempfang muß sichergestellt werden, daß das abgestrahlte Signal den gesetzten Grenzwert nicht überschreitet.

Dies kann beispielsweise dadurch erreicht werden, daß Sende-Ausgangsleistung und Sendeantenne aufeinander abgestimmt und unmittelbar miteinander verbunden sind und eine separate Empfangsantenne mit höherem Antennengewinn über eine getrennte Leitung mit einem zweiten Anschluß des Sende-Empfangs-Geräts verbunden ist. Nachteilig daran ist insbesondere der Leitungsaufwand und die Notwendigkeit zweier Anschlüsse des Sende-Empfangs-Geräts.

Die doppelte Leitungsführung und der zweite Anschluß am Gerät können vermieden werden, wenn in Antennennähe eine Umschalteinrichtung angeordnet wird, die vom Sende-Empfangs-Gerät gesteuert wird und über ein Relais oder einen elektronischen Schalter alternativ die Sendeantenne oder die Empfangsantenne mit dem Geräteanschluß verbindet. Hierzu ist aber die Erzeugung und Übertragung von Umschaltsignalen vom Sende-Empfangs-Gerät zu der Umschalteinrichtung erforderlich.

Der Erfindung liegt die Aufgabe zugrunde, eine Funk-Kommunikatons-Anordnung, welche bei weitgehender Freiheit in der Gestaltung der Antennenanordnung eine Einhaltung vorgegebener Leistungsbeschränkungen des Sendesignals sicherstellt, sowie hierfür geeignete Übertragungseinrichtungen anzugeben. Die erfindungsgemäße Funk-Kommunikations-Anordnung ist im Anspruch 1, hierfür geeignete Übertragungseinrichtungen sind in den Ansprüchen 13, und 19 beschrieben. Die Unteransprüche enthalten vorteilhafte Ausgestaltungen und Weiterbildungen der Erfindung.

Die erfindungsgemäße Funk-Kommunikationsanordnung stellt durch gezielten Einsatz einer absichtlichen Sendesignal-Dämpfung und deren Abstimmung auf die Ausgangsleistung des Sende-Empfangs-Geräts, den Antennengewinn der Sendeantenne und den vorgegebenen Grenzwert der abgestrahlten auf einen Referenzstrahler bezogenen Leistung die Einhaltung eines vorgegebenen Grenzwerts auf einfache Weise sicher. Dabei bleibt die Wahlfreiheit hinsichtlich des geeigneten Antennendiagramms und des Fabrikats und Typs des Sende-Emfpangs-Geräts weitgehend uneingeschränkt und die Einhaltung der Funksystem-Vorschriften wird auf besonders einfache Weise durch Bemessung einer Dämpfung gewährleistet. Die Sendesignal-Dämpfung beträgt insbesondere mindestens 3 dB.

Als Referenzstrahler sind insbesondere ein fiktiver isotroper Strahler oder ein Dipolstrahler gebräuchlich, wobei der Antennengewinn einer konkreten Antenne vorzugsweise in logarithmischem Maß in dBi gegenüber dem isotropen Strahler bzw. in dBd gegenüber dem Dipolstrahler angegeben werden.

Insbesondere können bei der erfindungsgemäßen Anordnung die in ihrer Sende-Ausgangsleistung auf den Anschluß einer Dipol-Antenne abgestimmten Sende-Empfangs-Geräte durch Einfügen der Sendesignal-Dämpfung in der Übertragungseinrichtung auch in Verbindung mit stärker bündelnden Sendeantennen zugelassen werden. Vorteilhafterweise ist der Antennengewinn der Sendeantenne mindestens gleich 6 dBi, insbesondere höher als 12 dBi.

Bei Einsatz einer separaten Empfangsantenne, die dann typischerweise einen höheren Antennengewinn als die Sendeantenne aufweist, kann die Entkopplung der Empfangsantenne vom Sendesignal ohne die Verwendung von gesteuerten Umschaltern durch Einfügung einer Dämpfung des Signalwegs vom geräteseitigen Anschluß zum Empfangsantennen-Anschluß bewerkstelligt werden. Die Dämpfung wirkt vorzugsweise nur in Sendesignalrichtung, aber nicht oder nur in geringerem Maß in Gegenrichtung für Empfangssignale. Als Empfangsantennen können insbesondere vorteilhafterweise Reflektorantennen, kaskadierte Dipolantennen oder sogenannte Patch-Antennen mit Antennengewinnen von vorzugsweise mindestens 6 dBi, insbesondere mehr als 12 dBi eingesetzt werden.

Bei Einsatz einer Sende-Empfangs-Antenne mit für Sende- und Empfangsfall gleichem Antennendiagramm wird vorteilhafterweise in Sendesignalrichtung eine ausreichend hohe Dämpfung und in Empfangssignalrichtung eine geringe Dämpfung oder eine Verstärkung in der Übertragungseinrichtung realisiert.

Antennenformen mit baulich vereinigten, aber durch getrennte Speisung unterschiedliche Diagramme im Sende- und Empfangsfall aufweisenden Sende- und Empfangsantennen werden im Sinne der Erfindung als getrennte Sendeantenne und Empfangsantenne behandelt. Solche Formen sind beispielsweise Patch-Antennen mit zwei getrennten Speisungen unterschiedlicher geometrischer Anordnung.

Die Erfindung ist insbesondere vorteilhaft für Funk-Kommunikationsanordnungen mit von dem Sende-Empfangs-Gerät weiter beabstandeter Antennenanordnung, wobei die Übertragungseinrichtung vorteilhafterweise bei der Antennenanordnung angeordnet und mit dem Sende-Empfangs-Gerät über ein Kabel verbunden ist. Das Kabel kann auch Bestandteil der Übertragungseinrichtung sein und bei der Dimensionierung des Dämpfungswertes kann die Kabeldämpfung mitberücksichtigt werden.

Bei den Übertragungseinrichtungen ist nachfolgend zwischen zwei Gruppen von Ausführungsformen prinzipiell unterschieden, von denen die eine zum Anschluß an eine Sende-Empfangs-Antenne mit für Sende- und Empfangsfall gleichem Diagramm und die andere zum Anschluß an eine Antennenanordnung mit separaten Sende- bzw. Empfangsantennen vorgesehen ist. Die Übertragungseinrichtungen sind auch unabhängig von der speziellen Kommunikationseinrichtung nach Anspruch 1 vorteilhaft einsetzbar zwischen einem Sende-Empfangs-Gerät und einer Antennenanordnung. Die Empfangseinrichtungen können insbesondere ohne Umschalter ausgeführt sein, so daß Steuerdetektoren, Steuersignale oder Steuerleitungen entfallen und keine Änderungen oder Ergänzungen an gebräuchlichen Sende-Empfans-Geräten vorgenommen werden müssen. Ferner können Sendefrequenz und Empfangsfrequenz gleich sein. Die Übertragungseinrichtungen sind anhand bevorzugter Ausführungsbeispiele unter Bezugnahme auf die Abbildungen noch eingehend erläutert und veranschaulicht. Dabei zeigt:
- Fig. 1: eine erste Übertragungseinrichtung zum Anschluß an eine Sende-Empfangs-Antenne
- Fig. 2: eine Abwandlung der Einrichtung nach Fig. 1
- Fig. 3: eine Sonderform einer Übertragungseinrichtung zum Anschluß an eine Sende-Empfangsantennte
- Fig. 4: eine Übertragungseinrichtung für getrennte Sende- bzw. Empfangsantennen
- Fig. 5: eine Erweiterung der Einrichtung nach Fig. 4 auf jeweils mehrere Sende- bzw. Empfangsantennen

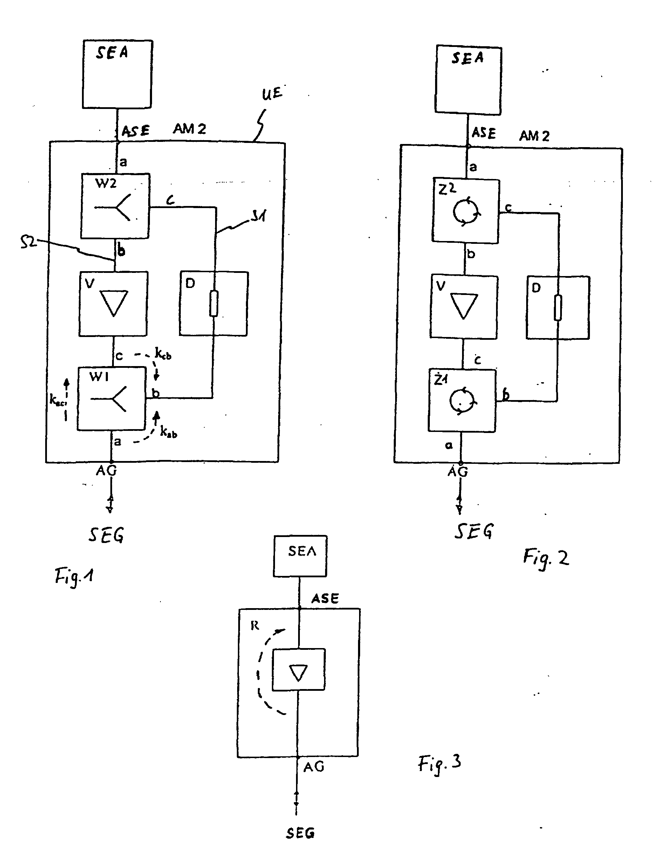

In Fig. 1 ist eine Übertragungseinrichtung UE dargestellt, welche einen ersten Anschluß AG für ein Sende-Empfangs-Gerät sowie einen zweiten Anschluß ASE für eine Sende-Empfangsantenne SEA aufweist. Die Sende-Empfangsantenne SEA kann insbesondere eine Hochgewinn-Antenne sein. Zur Einhaltung der angenommenen Sendeleistungs-Beschränkung des Funksystems, in welchem die Anordnung betrieben sei, und zur gleichzeitigen Gewährleistung eines guten Empfangsverhaltens zeigt die Übertragungseinrichtung für eine Signalübertragung vom ersten Anschluß AG, an welchem ein Sendesignal vom Sende-Empfangs-Gerät SEG eingespeist wird, zum zweiten Anschluß ASE ein geringeres Übertragungsmaß als in Gegenrichtung für ein am zweiten Anschluß ASE ankommendes Empfangssignal zum ersten Anschluß AG und damit zum Sende-Empfangs-Gerät SEG. Insbesondere kann das Übertragungsmaß vom ersten Anschluß AG zum zweiten Anschluß ASE dämpfend und das Übertragungsmaß in Gegenrichtung vom zweiten Anschluß ASE zum ersten Anschiuß AG verstärkend sein.

Hierzu weist die Übertragungseinrichtung UE zwei parallele Signalpfade S1 und S2 auf, welche über eine erste Leitungsverzweigung W1 mit dem ersten Anschluß AG und über eine zweite Leitungsverzweigung W2 mit dem zweiten Anschluß ASE verbunden sind. In dem ersten Signalweg S1 ist vorzugsweise ein Dämpfungsglied D angeordnet, welches auch einstellbar sein kann und in einem Sonderfall auch 0 dB Dämpfung aufweisen kann. Im zweiten Signalweg ist gemäß einer vorteilhaften Ausführungsform ein Verstärker V angeordnet, welcher in Richtung von der zweiten Leitungsverzweigung W2 zur ersten Leitungsverzweigung W1 verstärkend wirkt und in Gegenrichtung eine hohe Rückwärtsisolation zeigt. Für die Signalübertragung durch die Leitungsverzweigungen sind beispielhaft einige Kopplungsfaktoren k_{ab}, k_{ac}, k_{cb} repräsentativ für die Signalüberkopplungen zwischen den jeweiligen Anschlüssen eingezeichnet. Anstelle von Kopplungsfaktoren können auch Dämpfungsmaße oder allgemein Übertragungsmaße zur Beschreibung benutzt werden.

Für die gesamte Signaldämpfung eines beim ersten Anschluß AG eingespeisten Sendesignals tragen die Leitungsverzweigung W1, das Dämpfungsglied D sowie die Leitungsverzweigung W2 Anteile bei. Die Dämpfungsanteile der Leitungsverzweigungen sind im Regelfall konstruktionsbedingt und betragen für die Ausführung der Leitungsverzweigungen als Leistungsteiler beispielsweise je 3 dB. Über die Bemessung des Dämpfungsglieds ist dann auf besonders einfache Weise die gesamte Durchgangsdämpfung von AG nach ASE einstellbar und insbesondere an Sende-Ausgangsleistung des Sende-Empfangs-Geräts SEG und Antennengewinn der Sende-Empfangsantenne SEA anpassbar. Es sei hierbei angenommen, daß die Gesamtdämpfung vom ersten Anschluß AG über die Leitungsverzweigung W1, den zweiten Signalweg S2 und die zweite Leitungsverzweigung W2 zum zweiten Anschluß ASE wesentlich höher liegt als die Signaldämpfung über den Signalweg S1 und deshalb der zweite Signalweg keinen nennenswerten Sendesignalanteil auf die Antenne leitet. Dies kann beispielsweise durch Verwendung eines Verstärkers V mit hoher Rückwärtsisolation erfolgen. Die Sendesignal-Dämpfung über den zweiten Signalwg S2 ist vorzugsweise um mindestens 6 dB, insbesondere um mehr als 10 dB höher als die Sendesignal-Dämpfung über den ersten Signalweg S1. Die Rückwärtsdämpfung des Verstärkers liegt typischerweise im Bereich von 40 dB bis 60 dB.

Bei der Ausführung der Übertragungseinrichtung nach Fig. 1 ist bei der Dimensionierung noch zu beachten, daß die gesamte Schleifenverstärkung in der aus Verstärker, Leitungsverzweigung W1, erstem Signalweg S1 mit Dämpfungsglied D und Leitungsverzweigung W2 mit jeweiliger Signalüberkopplung in den Leitungsverzweigungen von c nach b (W1 bzw. W2) kleiner als 0 dB ist, so daß in dieser Schleife keine Schwingung angeregt wird. Bei Verwendung von Leistungsteilern als Leitungsverzweigungen beträgt die Isolationsdämpfung zwischen c und b typischerweise ca. 12 dB.

Die Fig. 2 unterscheidet sich von der Fig. 1 im wesentlichen dadurch, daß als Leitungsverzweigungen Zirkulatoren Z1, Z2 eingesetzt sind, welche eine geringere Durchlaßdämpfung von a nach b und von c nach a zeigen als die Leistungsteiler in entsprechender Anordnung. Typische Werte für die Durchgangsdämpfung zwischen diesen Toren liegt typischerweise bei weniger als 1 dB. Die Isolationsdämpfung in Gegenrichtung und damit auch von den Toren c nach b ist wesentlich höher und liegt typischerweise bei mindestens 12 dB.

Die Fig. 3 zeigt eine Sonderform der Übertragungseinrichtung, bei welcher nur ein Signalweg zwischen erstem Anschluß AG und zweitem Anschluß ASE vorgesehen ist. In diesem Signalweg ist ein Verstärker V angeordnet, welcher in der Signalrichtung vom zweiten Anschluß ASE zum ersten Anschluß AG, also für ein eintreffendes Empfangssignal, verstärkend wirkt, welcher aber zugleich eine nur mäßige Rückwärtsdämpfung, veranschaulicht durch den Pfeil mit unterbrochener Linie R, zeigt und auf diese Weise ein bei AG eingespeistes Sendesignal gedämpft zum zweiten Anschluß ASE und damit auf die Sende-Empfangsantenne SEA weiterleitet.

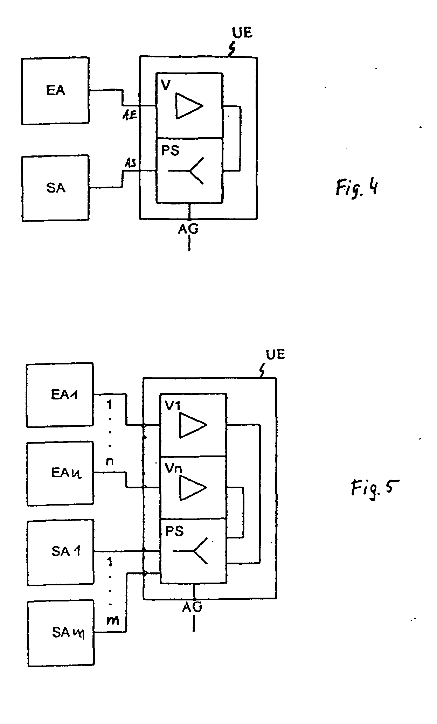

Bei der in Fig. 4 skizzierten Ausführungsform weist die Übertragungseinrichtung UE wiederum einen geräteseitigen ersten Anschluß AG auf, im Unterschied zu den vorhergehenden Ausführungen jedoch getrennte Anschlüsse AE für eine Empfangsantenne EA und AS für eine von der Empfangsantenne unabhängige Sendeantenne SA. Es sind in diesem Fall zwei Signalwege vorgesehen, welche den Anschluß AE bzw. den Anschluß AS über eine Leitungsverzweigung W mit dem ersten Anschluß AG verbinden. In dem Signalweg zwischen AS und AG kann entsprechend den vorhergehenden Erläuterungen zu Fig. 1 und Fig. 2 ein Dämpfungsglied angeordnet sein, welches die Einhaltung der Sendeleistungs-Beschränkungen des Funksystems berücksichtigt. Im Signalweg zwischen AE und der Leitungsverzweigung W ist vorteilhafterweise ein unidirektional wirkender Verstärker V angeordnet. Für die Ausführungen bezüglich der Rückwärtsdämpfung des Vestärkers V und der Gesamtdämpfung wird auf die Erläuterungen zu Fig. 1 Bezug genommen, welche hier in entsprechender Weise gelten. Eine Schwingungsneigung des Systems kann hier dadurch entstehen, daß ein von der Sendeantenne SA abgestrahltes Signal auf die benachbarte Empfangsantenne EA überkoppelt, im Verstärker V verstärkt wird und unter der Einwirkung der Isolationsdämpfung der Leitungsverzweigung W wieder zum Anschluß AS gelangt, so daß wiederum eine geschlossene Signalschleife vorliegt. Für die Dämpfungsbemessung gelten hier wiederum entsprechende Überlegungen wie bei Fig. 1. Im Regelfall kann die Signalüberkopplung von der Sendeantenne zur Empfangsantenne durch die gegenseitige räumliche Anordnung der Antennen bereits so weit unterdrückt werden, daß keine Schwingungsneigung besteht.

In Fig. 5 ist die Anordnung nach Fig. 4 dahingehend erweitert, daß mehrere Empfangsantennen EA1 bis EAn sowie mehrere Sendeantennen SA1 bis SAm vorgesehen sind. Durch die mehreren Antennen lassen sich gezielt mehrere Funkgeräte, die im Funkbereich evtl. unterschiedlich weit entfernt und unter verschiedenen Winkeln gegenüber der betrachteten Station ausgerichtet sind, gleichzeitig erfaßen oder anpeilen. Durch den Einsatz mehrerer gerichteter Antennen können auch Störungen ausgeblendet werden.

Es können auch vorteilhafterweise mehrere Richtantennen als Empfangsantennen in Verbindung mit einer omnidirektionaien Antennen als Sendeantenne eingesetzt werden. Die Leitungsverzweigung ist bei mehreren Antennen im Regelfall komplexer aufgebaut und kann auch mehrstufig ausgeführt sein. Beispielsweise in der Art, daß mit dem ersten Anschluß AG unmittelbar verbunden ist ein Zirkulator, welcher eine Aufteilung in Sendezweige und Empfangszweige bewirkt, und nachfolgend im Sende- und/oder Empfangszweig eine weitere Aufteilung in mehrere Teilwege entsprechend mehreren Einzelantennen durch einstufige oder mehrstufige Leistungsteiler erfolgt. Alternativ können auch die Signalwege mehrerer oder aller Empfangsantennen von den Anschlüssen AE1, ... AEn zuerst in einem Koppler zusammengefaßt und dann über einen gemeinsamen Verstärker der Leitungsverzweigung zugeführt werden.

Die Erfindung ist nicht auf die vorbeschriebenen Ausführungsbeispiele beschränkt, sondern im Rahmen fachmännischen Könnens in mancher Weise abwandelbar.

## Patentansprüche

1. Funk-Kommunikationsanordnung zum Einsatz in einem Funksystem mit einem vorgegebenen Grenzwert für die von einer Antennenanordnung abgestrahlte, auf einen Referenzstrahler bezogene Leistung mit einer Antennenanordnung, welche wenigstens eine Sende- und eine Empfangsantenne (SE, SA), gegebenenfalls als Sende-Empfangs-Antenne (SEA) umfasst, einem Sende-Empfangsgerät (SEG) und einer zwischen Antennenanordnung und das Sende-Empfangs-Gerät eingefügten Übertragungseinrichtung (UE) mit einem ersten Anschluss (AG) für das Sende-Empfangsgerät (SEG) und einem oder mehreren antennenseitigen Anschlüssen (ASE, AE, AS) für die Sende- und Empfangsantenne, wobei das Übertragungsmaß der Übertragungseinrichtung für ein Empfangssignal von der Antennenanordnung zum ersten Anschluss verstärkend ist, **dadurch gekennzeichnet, dass** das Übertragungsmaß der Übertragungseinrichtung für ein am ersten Anschluss (AG) von dem Sende-Empfangs-Gerät (SEG) eingespeistes Sendesignal zu der Sendeantenne dämpfend ist, dass die Sendeantenne einen höheren Gewinn aufweist als eine Dipolantenne und, dass die Sendesignal-Dämpfung der Übertragungseinrichtung annähernd gleich oder größer ist als der Antennengewinn der Sendeantenne gegenüber einer Dipol-Antenne ist.

2. Anordnung nach Anspruch 1, **dadurch gekennzeichnet, daß** die Sendesignal-Dämpfung der Übertragungseinrichtung mindestens 3 dB beträgt.

3. Anordnung nach Anspruch 1 oder 2, **dadurch gekennzeichnet, dass** die Sende-Ausgangsleistung des Sende-Empfangs-Geräts zumindest annähernd gleich der in dem Funksystem maximalen zulässigen abgestrahlten Leistung einer Dipol-Sendeantenne ist.

4. Anordnung nach einem der Ansprüche 1 bis 3, **dadurch gekennzeichnet, daß** die Antennenanordnung eine von der Sendeantenne getrennte Empfangsantenne aufweist, die gleichfalls über die Übertragungseinrichtung mit dem Sende-Empfangs-Gerät verbunden ist, und daß die Dämpfung der Übertragungseinrichtung vom Anschluß des Sende-Empfangs-Gerät zu der Empfangsantenne wesentlich größer ist als der Antennengewinn der Empfangsantenne.

5. Anordnung nach einem der Ansprüche 1 bis 4, **dadurch gekennzeichnet, daß** der Antennengewinn der Sendeantenne mindestens gleich 6 dBi, vorzugsweise höher als 12 dBi ist.

6. Anordnung nach Anspruch 4 oder 5, **dadurch gekennzeichnet, dass** der Antennengewinn der Empfangsantenne mindestens gleich 6 dBi, vorzugsweise höher als 12 dBi ist.

7. Anordnung nach einem der Ansprüche 1 bis 6, **dadurch gekennzeichnet, daß** die Sende- und/oder die Empfangsantenne eine Reflektorantenne oder eine kaskadierte Dipolantenne ist.

8. Anordnung nach einem der Ansprüche 1 bis 6, **dadurch gekennzeichnet, daß** die Sende- und/oder die Empfangsantenne eine Patch-Antenne ist.

9. Anordnung nach Anspruch 8, **dadurch gekennzeichnet, daß** Sende- und Empfangsantenne mit unterschiedlichen Antennendiagrammen durch getrennte Speisegeometrien in einem gemeinsamen Antennenpatch realisiert sind.

10. Anordnung nach einem der Ansprüche 1 bis 9, **dadurch gekennzeichnet, daß** die Übertragungseinrichtung bei der Antennenanordnung angeordnet und über ein Kabel mit dem Sende-Empfangs-Gerät verbunden ist.

11. Anordnung nach Anspruch 10, **dadurch gekennzeichnet, daß** das Kabel Bestandteil der Übertragungseinrichtung ist.

12. Anordnung nach Anspruch 10 oder 11, **dadurch gekennzeichnet, daß** die Antennenanordnung und die Übertragungseinrichtung eine bauliche Einheit bilden.

13. Übertragungseinrichtung für eine Funk-Kommunikations-Anordnung, insbesondere nach einem der Ansprüche 1 bis 12, mit einem ersten Anschluss (AG) für ein Sende-Empfangs-Gerät zur Einspeisung eines Sendesignals und mit einem zweiten Anschluss zum Anschluss (ASE) einer Sende-Empfangs-Antenne und mit zwei parallelen Signalpfaden zwischen dem ersten und dem zweiten Anschluss, wobei das Übertragungsmaß vom zweiten Anschluss zum ersten Anschluss verstärkend ist, die beiden Signalwege über eine erste Leitungsverzweigung (W1) mit dem ersten Anschluß und über eine zweite Leitungsverzweigung (W2) mit dem zweiten Anschluss verbunden sind und in einem der Signalwege ein Verstärker (V) für die Signaieinriclatung von dem zweiten Anschluss zum ersten Anschluss vorhanden ist, **gekennzeichnet durch** ein dämpfendes Übertragungsmaß vom ersten Anschluss (AG) zum zweiten Anschluss (ASE) und einen Leistungsteiler als Leitungsverzweigung.

14. Übertragungseinrichtung nach Anspruch 13, **dadurch gekennzeichnet, daß** der Unterschied im Übertragungsmaß der Übertragungseinrichtung in entgegengesetzten Signalrichtungen größer als 6 dB, vorzugsweise größer als 10 dB ist.

15. Anordnung nach Anspruch 14, **dadurch gekennzeichnet, dass** der erste Signalweg ein Dämpfungsglied und der zweite Signalweg einen in Richtung von der zweiten zur ersten Leitungsverzweigung wirkenden Verstärker enthält.

16. Übertragungseinrichtung nach Anspruch 15, **dadurch gekennzeichnet, dass** das Dämpfungsglied einstellbar ist.

17. Übertragungseinrichtung nach einem der Ansprüche 13 bis 16, **dadurch gekennzeichnet, dass** die gegenseitige Entkopplung der Signalwege in den Leitungsverzweigungen größer als 10 dB ist.

18. Übertragungseinrichtung nach einem der Ansprüche 13 bis 17, **dadurch gekennzeichnet, dass** die Schleifenverstärkung in der aus den beiden Signalwegen und den beiden Leitungsverzweigungen gebildeten Schleife kleiner als 0 dB ist.

19. Übertragungseinrichtung für eine Funk-Kommunikations-Anordnung, insbesondere nach einem der Ansprüche 1 bis 12, mit einem ersten Anschluss (AG) für ein Sende-Empfangs-Gerät zur Einspeisung eines Sendesignals und mit mehreren antennenseitigen Anschlüssen (AE, AS) für mindestens eine Sendeantenne und mindestens eine Empfangsantenne sowie mit mehreren Signalwegen und mit einer Leitungsverzweigung zur Verbindung der mehreren antennenseitigen Anschlüsse mit dem ersten Anschluss, wobei in einem Signalweg von einem Empfangsantennen-Anschluss zu der Leitungsverzweigung ein Verstärker (V) angeordnet ist, **dadurch gekennzeichnet, dass** das Übertragungsmaß vom ersten Anschluss zu einem antennenseitigen Anschluss dämpfend ist und dass die Leitungsverzweigung mindestens einen Leistungsteiler enthält.

20. Übertragungseinrichtung nach Anspruch 19, **dadurch gekennzeichnet, dass** das Übertragungsmaß eines Signalwegs von dem ersten Anschluss zu einem Empfangsantennenanschluss geringer, vorzugsweise um mehr als 6 dB geringer ist als in umgekehrter Signalrichtung.

21. Übertragungseinrichtung nach Anspruch 19 oder 20, **dadurch gekennzeichnet, dass** in einem Signalweg von dem ersten Anschluss zu einem Sendeantennen-Anschluss ein Dämpfungsglied angeordnet ist.

22. Übertragungseinrichtung nach einem der Ansprüche 19 bis 21, **dadurch gekennzeichnet, dass** die gegenseitige Entkopplung der mehreren Signalwege in der Leitungsverzweigung größer als 10 dB ist.

## Claims

1. Radio communications arrangement for use in a radio system having a predetermined limit value for the power which is emitted from an antenna arrangement and is referred to a reference antenna element, having an antenna arrangement which has at least one transmitting antenna and at least one receiving antenna (SE, SA), possibly in the form of a transmitting/receiving antenna (SEA), a transmitter/receiver (SEG) and a transmission device (UE) which is inserted between the antenna arrangement and the transmitter/receiver, having a first connection (AG) for the transmitter/receiver (SEG) and having one or more antenna-side connections (ASE, AE, AS) for the transmitting and receiving antenna, with the transmission level of the transmission device for a received signal being amplified from the antenna arrangement to the first connection, **characterized in that** the transmission level of the transmission device for a transmission signal which is fed in at the first connection (AG) of the transmitter/receiver (SEG) is attenuated towards the transmitting antenna, **in that** the transmitting antenna has a higher gain than a dipole antenna, and **in that** the transmission signal attenuation of the transmission device is approximately the same or is greater than the antenna gain of the transmission antenna in comparison to a dipole antenna.

2. Arrangement according to Claim 1, **characterized in that** the transmission signal attenuation of the transmission device is at least 3 dB.

3. Arrangement according to Claim 1 or 2, **characterized in that** the transmission output power of the transmitter/receiver is at least approximately equal to the maximum permissible emitted power in the radio system from a dipole transmitting antenna.

4. Arrangement according to one of Claims 1 to 3, **characterized in that** the antenna arrangement has a receiving antenna which is separate from the transmitting antenna and is likewise connected via the transmission device to a transmitter/receiver, and **in that** the attenuation of the transmission device from the connection of the transmitter/receiver to the receiving antenna is considerably greater than the antenna gain of the receiving antenna.

5. Arrangement according to one of Claims 1 to 4, **characterized in that** the antenna gain of the transmitting antenna is at least equal to 6 dBi and is preferably more than 12 dBi.

6. Arrangement according to Claim 4 or 5, **characterized in that** the antenna gain of the receiving antenna is at least equal to 6 dBi and is preferably more than 12 dBi.

7. Arrangement according to one of Claims 1 to 6, **characterized in that** the transmitting antenna and/or the receiving antenna is a reflector antenna or a cascaded dipole antenna.

8. Arrangement according to one of Claims 1 to 6, **characterized in that** the transmitting antenna and/or the receiving antenna is a patch antenna.

9. Arrangement according to Claim 8, **characterized in that** the transmitting antenna and the receiving antenna are designed to have a different antenna polar diagram by means of separate feed geometries in a common antenna patch.

10. Arrangement according to one of Claims 1 to 9, **characterized in that** the transmission device is arranged in the antenna arrangement, and is connected to the transmitter/receiver via a cable.

11. Arrangement according to Claim 10, **characterized in that** the cable is a component of the transmission device.

12. Arrangement according to Claim 10 or 11, **characterized in that** the antenna arrangement and the transmission device form one physical unit.

13. Transmission device for a radio communications arrangement, in particular according to one of Claims 1 to 12, having a first connection (AG) for a transmitter/receiver for feeding a transmission signal, and having a second connection for the connection (ASE) of a transmitting/receiving antenna and having two parallel signal paths between the first and the second connection, with the transmission level from the second connection to the first connection being amplified, the two signal paths being connected via a first line junction (W1) to the first connection and via a second line junction (W2) to the second connection, and an amplifier (V) for the signal device from the second connection to the first connection being provided in one of the signal paths, **characterized by** an attenuating transmission level from the first connection (AG) to the second connection (ASE) and by a power splitter as the line junction.

14. Transmission device according to Claim 13, **characterized in that** the difference in the transmission level of the transmission device in the opposite signal directions is greater than 6 dB, and is preferably greater than 10 dB.

15. Arrangement according to Claim 14, **characterized in that** the first signal path contains an attenuator and the second signal path contains an amplifier which acts in the direction from the second to the first line junction.

16. Transmission device according to Claim 15, **characterized in that** the attenuator is adjustable.

17. Transmission device according to one of Claims 13 to 16, **characterized in that** the mutual decoupling between the signal paths in the line junctions is greater than 10 dB.

18. Transmission device according to one of Claims 13 to 17, **characterized in that** the loop gain in the loop which is formed from the two signal paths and the two line junctions is less than 0 dB.

19. Transmission device for a radio communications arrangement, in particular according to one of Claims 1 to 12, having a first connection (AG) for a transmitter/receiver for feeding a transmission signal and having two or more antenna-side connections (AE, AS) for at least one transmitting antenna and at least one receiving antenna, and having two or more signal paths and having a line junction for connection of the two or more antenna-side connections to the first connection, with an amplifier (V) being arranged in a signal path from a receiving antenna connection to the line junction, **characterized in that** the transmission level from the first connection to an antenna-side connection is attenuating, and **in that** the line junction contains at least one power splitter.

20. Transmission device according to Claim 19, **characterized in that** the transmission level of a signal path from the first connection to a receiving antenna connection is lower, preferably more than 6 dB lower, than in the opposite signal direction.

21. Transmission device according to Claim 19 or 20, **characterized in that** an attenuator is arranged in a signal path from the first connection to a transmitting antenna connection.

22. Transmission device according to one of Claims 19 to 21, **characterized in that** the mutual decoupling between the two or more signal paths in the line junction is greater than 10 dB.

## Revendications

1. Dispositif de radiocommunication avec une valeur limite définie de la puissance rayonnée par un dispositif d'antennes se référant à un rayonnement de référence, pour l'utilisation dans un système de radio, avec un dispositif d'antennes comportant au moins une antenne d'émission et une antenne de réception (SE, SA) le cas échéant sous la forme d'une antenne d'émission-réception (SEA), un appareil d'émission-réception (SEG) et un équipement de transmission (UE) inséré entre le dispositif d'antennes et l'appareil d'émission-réception, avec un premier raccordement (AG) pour l'appareil d'émission-réception (SEG) et un ou plusieurs raccordements (ASE, AE, AS) du côté des antennes pour l'antenne d'émission et l'antenne de réception, le rapport de transmission de l'équipement de transmission étant amplificateur pour un signal de réception depuis le dispositif d'antennes jusqu'au premier raccordement, **caractérisé en ce que** le rapport de transmission de l'équipement de transmission est atténuateur pour un signal d'émission injecté dans le premier raccordement (AG) depuis l'appareil d'émission-réception (SEG) jusqu'à l'antenne d'émission, **en ce que** l'antenne d'émission présente un gain plus élevé qu'une antenne dipôle et **en ce que** l'atténuation du signal d'émission dans l'équipement de transmission est approximativement égale ou supérieure au gain d'antenne de l'antenne d'émission par rapport à une antenne dipôle.

2. Dispositif selon la revendication 1, **caractérisé en ce que** l'atténuation du signal d'émission dans l'équipement de transmission est d'au moins 3 dB.

3. Dispositif selon la revendication 1 ou 2, **caractérisé en ce que** la puissance de sortie d'émission de l'appareil d'émission-réception est au moins approximativement égale à la puissance maximale admissible rayonnée dans le système radio par une antenne d'émission dipôle.

4. Dispositif selon une des revendications 1 à 3, **caractérisé en ce que** le dispositif d'antennes présente une antenne de réception séparée de l'antenne d'émission, qui est simultanément raccordée à l'appareil d'émission-réception à travers l'équipement de transmission, et **en ce que** l'atténuation de l'équipement de transmission depuis le raccordement de l'appareil d'émission-réception jusqu'à l'antenne de réception est sensiblement supérieure au gain de l'antenne de l'antenne de réception.

5. Dispositif selon une des revendications 1 à 4, **caractérisé en ce que** le gain de l'antenne de l'antenne d'émission est au moins égal à 6 dBi, de préférence supérieur à 12 dBi.

6. Dispositif selon la revendication 4 ou 5, **caractérisé en ce que** le gain de l'antenne de l'antenne de réception est au moins égal à 6 dBi, de préférence supérieur à 12 dBi.

7. Dispositif selon une des revendications 1 à 6, **caractérisé en ce que** l'antenne d'émission et/ou l'antenne de réception est une antenne à réflecteur ou une antenne à dipôles en cascade.

8. Dispositif selon une des revendications 1 à 6, **caractérisé en ce que** l'antenne d'émission et/ou l'antenne de réception est une antenne à patchs.

9. Dispositif selon la revendication 8, **caractérisé en ce que** l'antenne d'émission et l'antenne de réception avec des diagrammes d'antennes différents sont réalisées au moyen de géométries de distribution séparées dans un patch d'antennes commun.

10. Dispositif selon une des revendications 1 à 9, **caractérisé en ce que** l'équipement de transmission est disposé près du dispositif d'antennes et raccordé à l'appareil d'émission-réception au moyen d'un câble.

11. Dispositif selon la revendication 10, **caractérisé en ce que** le câble fait partie de l'équipement de transmission.

12. Dispositif selon la revendication 10 ou 11, **caractérisé en ce que** le dispositif d'antennes et l'équipement de transmission forment une unité structurelle.

13. Équipement de transmission pour un dispositif de radiocommunication, en particulier selon une des revendications 1 à 12, avec un premier raccordement (AG) pour un appareil d'émission-réception pour distribuer un signal d'émission et avec un deuxième raccordement pour raccorder (ASE) une antenne d'émission-réception et avec deux chemins de signaux parallèles entre le premier et le deuxième raccordement, le rapport de transmission du deuxième raccordement vers le premier étant amplificateur, les deux chemins de signaux étant raccordés au moyen d'une première jonction de circuits (W1) au premier raccordement et au moyen d'une deuxième jonction de circuits (W2) au deuxième raccordement et que dans un des chemins de signaux se trouve un amplificateur (V) pour l'équipement de signaux du deuxième raccordement au premier raccordement, **caractérisé par** un rapport de transmission atténuateur du premier raccordement (AG) au deuxième raccordement (ASE) et par un séparateur de puissance comme jonction de circuits.

14. Équipement de transmission selon la revendication 13, **caractérisé en ce que** la différence du rapport de transmission de l'équipement de transmission dans des directions opposées du signal est supérieure à 6 dB, de préférence supérieure à 10 dB.

15. Dispositif selon la revendication 14, **caractérisé en ce que** le premier chemin de signaux contient un élément atténuateur et que le deuxième chemin de signaux contient un amplificateur agissant dans la direction de la deuxième jonction de circuits vers la première.

16. Équipement de transmission selon la revendication 15, **caractérisé en ce que** l'élément atténuateur est réglable.

17. Équipement de transmission selon une des revendications 13 à 16, **caractérisé en ce que** le découplage mutuel des chemins de signaux dans les jonctions de circuits est supérieur à 10 dB.

18. Équipement de transmission selon une des revendications 13 à 17, **caractérisé en ce que** l'amplification de boucle dans la boucle formée par les deux chemins de signaux et par les deux jonctions de circuits, est inférieure à 0 dB.

19. Équipement de transmission pour un dispositif de radiocommunication, en particulier selon une des revendications 1 à 12, avec un premier raccordement (AG) pour un appareil d'émission-réception pour distribuer un signal d'émission et avec plusieurs raccordements (AE, AS) du côté des antennes pour au moins une antenne d'émission et au moins une antenne de réception, ainsi qu'avec plusieurs chemins de signaux et avec une jonction de circuits pour relier la multiplicité de raccordements du côté des antennes avec le premier raccordement, un amplificateur (V) étant disposé dans un des chemins de signaux d'un raccordement d'antennes de réception vers la jonction de circuits, **caractérisé en ce que** le rapport de transmission du premier raccordement vers un raccordement du côté des antennes est atténuateur et **en ce que** la jonction de circuits contient au moins un séparateur de puissance.

20. Équipement de transmission selon la revendication 19, **caractérisé en ce que** le rapport de transmission d'un chemin de signaux du premier raccordement vers un raccordement d'antennes de réception est plus faible, de préférence plus faible de plus de 6 dB que dans la direction opposée des signaux.

21. Équipement de transmission selon la revendication 19 ou 20, **caractérisé en ce qu'**un élément atténuateur est disposé dans un chemin de signaux du premier raccordement vers un raccordement d'antennes d'émission.

22. Équipement de transmission selon une des revendications 19 à 21, **caractérisé en ce que** le découplage mutuel de la multiplicité de chemins de signaux dans la jonction de circuits est supérieur à 10 dB.
